# EUROPEAN PATENT APPLICATION

(11) **EP 2 453 279 A1**
(43) Date of publication of application: **16.05.2012**
(21) Application number: 11188881.4
(22) Date of filing: 11.11.2011
(51) Int. Cl.: G02B 6/42

(54) **Accessory with connector for electrical and optical data circuits**

(30) Priority: 12.11.2010 US 413128 P
(71) Applicant: Research in Motion Limited, Waterloo, Ontario N2L 3W8 (CA)
(72) Inventor: Sschwandt, Sheldon Terry, Waterloo, Ontario N2L 3W8 (CA); Barake, Omar, Waterloo, Ontario N2L 3W8 (CA); Winger, Lyall Kenneth, Waterloo, Ontario N2L 5R9 (CA); Dikun, Raymond Michael, Waterloo, Ontario N2L 5R9 (CA)
(74) Representative: Bryn-Jacobsen, Caelia

(57) **Abstract**

An electronic accessory (300) connectable to a remote electronic device through a data interface. The electronic accessory includes an electronic circuit (320) configured to exchange data through a data interface and an optical and electrical circuit connector (106). The optical and electrical circuit connector includes a connector body (106) configured to engage a corresponding connector (104), at least one optical terminal (130, 131, 133, 135) for the data interface coupled to the connector body, and at least one electrical data interface terminal (182) for the data interface coupled to the connector body. In one embodiment an inner (550) and an outer conductive ring (552) conduct electrical power.

## Description

### FIELD OF THE DISCLOSURE

The present disclosure generally relates to data communications connectors, and more particularly to connectors that couple both optical data communications circuits and electrical data communications circuits.

### BACKGROUND

Electronic devices are incorporating increasing amounts of data processing capabilities in increasingly smaller form factors. For example, portable devices are able to produce high resolution video data streams from either stored data or data received through either a wired or wireless data communications circuit. Portable electronic devices are increasingly able to process or create large volumes of data that are able to be provided to external data systems, such as storage or display devices. Such large volumes of data are sometimes communicated through special data interfaces to the device, causing several connectors to be generally required to provide high speed data communications and other electrical data communications interfaces, such as power or legacy data interfaces. Each connector of an electronic device introduces costs, product reliability concerns, and susceptibilities to inadvertent disconnections during use.

Presently available connectors for data communications circuits often utilize electrical data communications circuits that communicate data by varying voltage levels and associated current flows. As communications speeds increase for an electrical data communications circuit, electromagnetic interference becomes an increasing problem. Electromagnetic problems include both emitted interference generated by the high speed electrical data circuit and data errors suffered by the electrical data communications circuit that are induced by surrounding electromagnetic signals. These problems become more pronounced in high speed electrical data communications circuit that operate over long distances, such as a circuit between two electronic devices coupled through a multiple conductor cable that has connectors at each end.

Therefore, current data communications circuit connectors limit the ease of use and reliability of data communications circuits used by electronic devices to communicate high speed data.

### BRIEF DESCRIPTION OF THE DRAWINGS

The accompanying figures where like reference numerals refer to identical or functionally similar elements throughout the separate views, and which together with the detailed description below are incorporated in and form part of the specification, serve to further illustrate various embodiments and to explain various principles and advantages all in accordance with the present disclosure, in which:

FIG. 1 illustrates a mated optical and electrical data connector pair according to one example;

FIG. 2 illustrates a receptacle connector detail in accordance with one example;

FIG. 3 illustrates a data and power supply circuit connection, according to one example;

FIG. 4 illustrates an electronic device and cable with connector, in accordance with one example;

FIG. 5 illustrates an electrical and optical data communications circuit connector, according to one example;

FIG. 6 is an isometric view of the electrical and optical data communications circuit connector of FIG. 5;

FIG. 7 illustrates a first alternative electrical and optical connector;

FIG. 8 illustrates a modified first alternative electrical and optical connector;

FIG. 9 illustrates a second alternative electrical and optical connector;

FIG. 10 illustrates a third alternative electrical and optical connector;

FIGs. 11 through 14 illustrate an optical terminal engaging connector pair in accordance with one example; and

FIG. 15 is a block diagram of an electronic device and associated components in which the systems and methods disclosed herein may be implemented.

### DETAILED DESCRIPTION

As required, detailed embodiments are disclosed herein; however, it is to be understood that the disclosed embodiments are merely examples and that the systems and methods described below can be embodied in various forms. Therefore, specific structural and functional details disclosed herein are not to be interpreted as limiting, but merely as a basis for the claims and as a representative basis for teaching one skilled in the art to variously employ the present subject matter in virtually any appropriately detailed structure and function. Further, the terms and phrases used herein are not intended to be limiting, but rather, to provide an understandable description of the concepts.

The terms "a" or "an", as used herein, are defined as one or more than one. The term plurality, as used herein, is defined as two or more than two. The term another, as used herein, is defined as at least a second or more. The terms "including" and "having," as used herein, are defined as comprising (i.e., open language). The term "coupled," as used herein, is defined as "connected," although not necessarily directly, and not necessarily mechanically.

Described below are systems and methods for realizing an efficient data communications connector. The systems and methods described below are directed to a connector that provides a physical data link to, from, or to and from an electronic device, such as a smart phone or other electronic data processing device such as laptop computers, portable media players, and even automobiles. The systems and methods described below are directed to devices, accessories, and connectors that include one or more connectors in the form of a receptacle connector or a plug connector. The connectors may be used to mate two electronic devices or an electronic device and an electronic accessory to allow those components to exchange data. The connector includes terminals for one or more optical data communication circuits by which data may be exchanged optically between the electronic device and the connector.

In addition to terminals for optical communications circuits, the connector of some examples additionally includes terminals for an electrical data communications interface. The electrical data communications interface is able to be configured to conform to an existing electrical data communication standard such as the Universal Serial Bus (USB) interface. Including in the connector, along with the optical communications circuit terminals, an electrical data communications interface that conforms to an existing standard allows: (1) backwards compatibility whereby a user of an electronic device is able to use a standard cable to communicate data to another device having that standard interface; (2) an additional communication channel to be available for various uses, even in addition to the use of optical data communications channels; and (3) providing electrical power to the electronic device to operate the electronic device, charge its battery, or both operate and charge its battery.

In some examples described below, the optical communications circuit terminals, or optical terminals, are deployed proximate to electrical data interface terminals contained in the electrical data communications interface. The location of the electrical data interface terminals is able to be in several configurations on the connector relative to these optical terminals. In various examples, the optical terminals are substantially flush with the electrical data interface terminals, or recessed in various configurations relative to from the electrical data interface terminals. Some connectors support multiple optical communications circuits and include multiple optical terminals. The multiple optical terminals are able to be located on opposite sides of the electrical data communications interface in a side-by-side arrangement where the optical terminals are on the sides of the electrical data communications interface, or two optical interfaces are able to be located on opposite sides of the electrical data communications interface in a stacked configuration where the optical terminals are above and below the electrical data communications interface. Some connectors are able to have multiple optical terminals on each side of the electrical data communications interface, thereby providing more than two optical circuits through the connector. Yet further connectors are able to deploy optical terminals radially around the electrical data communications interface. These variations allow connectors with different profiles, where some profiles are wider and thinner and others are narrower and more bulky.

Some connectors include electrical terminals to convey electrical power to the electronic device from an external source or to supply an external electronic accessory with power from the electronic device. Some connectors are able to include separate power rings that are located so as to surround the electrical data communications interface as seen from an insertion side of the connector. The power rings enable the electronic device to receive power for operations, to charge a battery of the electronic device, or both. In some examples, these power rings are used to supply power from the electronic device to external electronic devices that are connected through the connector. These power rings are able to operate alone or in conjunction with other electrical power circuits, such as may be present in the electrical data communications interface. Additionally, a shroud is able to be incorporated into the connector to provide physical protection for the optical terminals and the electrical data communications interfaces.

The connector described below is able to include, but is not required to include, one or more magnets that are configured to mate to corresponding magnets on a mating connector, such as is located on an electronic device.

The optical terminals of some connectors are able to incorporate mating surfaces with a substantially convex spherical or spheroid terminal shape. A mating terminal of a mating connector has a surface with a concave shape to ensure a tight physical connection and minimize refractive and reflective losses. The connector of one example that mounts on an electronic device so as to form a connecting receptacle of the electronic device and may also include a door that opens to receive a mating connector.

The optical output on the electronic device is optically coupled to a light source such as a laser, which may be controlled with a driver. The optical input is optically coupled to a component that converts the optical signals to electrical signals. The connector may include, but need not include, a comparable light source and converting component.

In one variation of the concept, one or more optical terminals are able to include components that protrude from the connector to assist in physically securing the connector to a mating connector. In one example, the mating connector is mounted on an electronic device. In one example of this variation, a portion of the mating connector yields to receive the protruding optical terminal component and moves to a position that resists, but does not prevent, removal of the connector.

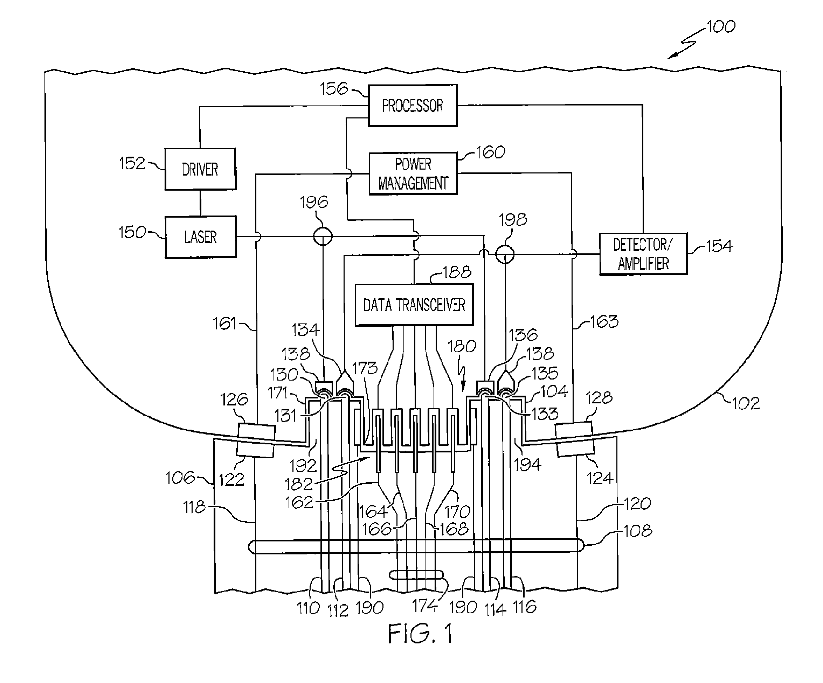

FIG. 1 illustrates a mated optical and electrical data connector pair 100 according to one example. The illustrated mated optical and electrical data connector pair 100 includes an electronic device 102 depicted as an outline of a housing. The electronic device 102 includes a receptacle connector 104 into which a plug connector 106 is mated. The mated optical and electrical data connector pair 100 depicts four optical circuit pathways, a first transmit optical pathway 110, a first receive optical pathway 112, a second transmit optical pathway 114 and a second receive optical pathway 116. The optical pathways in this description are identified according to the function of that optical pathway relative to the electronic device 102. For example, the electronic device 102 transmits data through the first transmit optical pathway 110. The four optical pathways in this example are contained within a cable bundle 108. As is discussed in further detail below, a suitable electro-optical device on the opposite end of the optical pathways receives the data conveyed through the transmit optical pathways and transmits data over an optical signal on the receive optical pathways.

The plug connector 106 also includes an electrical plug connector 182 and the receptacle connector 104 includes an electrical receptacle connector 180. In one example, the electrical plug connector 182 and the electrical receptacle connector 180 conform to the micro-USB form factor and electrical specifications as are defined by USB Implementers Forum, Incorporated.

The illustrated electrical plug connector 182 includes electrical data interface terminals consisting of five pins that are each coupled to a respective electrical conductor also contained in the cable bundle 108. A first electrical conductor 162, a second electrical conductor 164, a third electrical conductor 166, a fourth electrical conductor 168, and a fifth electrical conductor 170 are each coupled to a respective electrical data interface terminal, such as an electrical plug connector pin, contained in the electrical plug connector 182. These five electrical conductors form an electrical signal cable bundle 174. In one example, the electrical signal cable bundle 174 is encased in an electrical shield to control Electro-Magnetic Interference (EMI) generated by data communicated through the electrical signal cable bundle 174.

The plug connector 106 is shown to include an electrical connector shield 190 that encloses the five electrical conductors and extends to form part of the electrical plug connector 182. In one example, the electrical connector shield 190 of the plug connector 106 engages a corresponding shield (not shown) on the receptacle connector 104 to form a ground circuit across the optical and electrical data connector pair 100. The mating of connector shields is similar to the mating shields defined for USB connectors, as is known by practitioners of ordinary skill in the relevant arts.

The electrical receptacle connector 180 has corresponding electrical data interface terminals consisting of electrical connector plugs for each of the electrical plug connector pins contained in the electrical plug connector 182. The electrical plug connector plugs of the electrical receptor connector 180 are coupled to respective channels of a data transceiver 188. Data communicated over the electrical data communications interface of the mated optical and electrical data connector pair 100 is exchanged with processor 156. The data transceiver 188 performs signal translations and other processing to perform electrical communications over USB interface circuits of the receptacle connector 104 and plug connector 106. The processor 156 is one example is also able to perform communications protocol processing to implement USB compliant communications over the electrical data communications circuits contained in the receptacle connector 104 and plug connector 106.

In one example, the cable bundle 108 encloses the four optical pathways, the five electrical conductors of the USB interface, and two electrical power conductors: a positive bundle power conductor 118, and a ground bundle power conductor 120. The positive bundle power conductor 118 and the ground bundle power conductor 120 convey electrical power to the mated optical and electrical data connector pair 100 for use by the electronic device 102.

In one example, the cable bundle 108 encloses the four optical pathways, the five electrical conductors of the USB interface, and the two electrical power conductors in a single wrapping. The single wrapping of the cable bundle 108 extends for an arbitrary length to a remote end of the cable bundle that is opposite the plug connector 106. The remote end of the cable bundle is able to have its own remote connector (not shown). The remote connector is able to be similar to the plug connector 106 or consist of one or more other types of connectors suitable to convey optical signals and electrical power signals, as is described in detail below.

The four optical circuit pathways contained within the cable bundle 108 support two optical transmit paths and two optical receive paths by which the electronic device 102 respectively transmits and receives data. In one example, the optical circuit pathways are each a separate fiber-optic cable. Each fiber-optic cable of the optical circuit pathways has an optical terminal in the plug connector 106. For example, the first transmit optical pathway 110 has a first plug optical terminal 130 at the end of the plug connector 106.

The receptacle connector 104 includes device optical circuit terminals for each optical circuit pathway present in the plug connector 106. As depicted in FIG. 1, the receptacle connector 104 has a proximal end 171 at an end closer to the interior of the electronic device 102, and a distal end 173 at an end closer to the exterior of the electronic device 102). A first device transmit optical terminal 132 and a second device transmit optical terminal 136 are positioned to mate with corresponding connector optical terminals present in the plug connector 106, as is described in further detail below. Similarly, a first device receive optical terminal 134 and a second device receive optical terminal 138 are positioned to mate with other corresponding connector optical terminals present in the plug connector 106. As depicted in FIGs. 1 and 7-10, the optical circuit terminals of the receptacle connector 104 or plug connector 106 may be substantially in a row or in a line, with the optical circuit terminals interposed between the magnets, giving the connectors 104 and 106 a relatively thin profile. Further, the optical circuit terminals of the receptacle connector 104 are depicted as deployed proximate to the proximal end of the receptacle connector 104.

The mated optical and electrical data connector pair 100 depicts the optical terminals contained within the plug connector 106 and the receptacle connector 104. The plug connector 106 includes a first plug optical terminal 130, a second plug optical terminal 131, a third plug optical terminal 133 and a fourth plug optical terminal 135. Each of these plug optical terminals is at an end of a respective optical circuit pathway and mate, respectively, with the first device transmit optical terminal 132, the first device receive optical terminal 134, the second device transmit optical terminal 136, and the second device receive optical terminal 138. As illustrated for the mated optical and electrical data connector pair 100, each of the plug optical terminals has a surface with a convex spherical or spheroid shape.

The receptacle connector 104 has a series of device optical terminals that engage corresponding plug optical terminals once the plug connector 106 is inserted into the receptacle connector 104. The device optical terminals are shown to have surfaces with concave spherical or spheroid shapes that are conjugate surfaces of the convex spheroid shapes of the plug optical terminals. These device optical terminals engage the convex spheroid shapes of the plug optical terminals when the plug connector 106 is inserted into the receptacle connector 104. In some variations, one or more receptacle optical circuit terminals may be convex, and corresponding plug optical circuit terminals may be concave. As noted previously, the shapes of the corresponding components may promote a more ready and secure mating, and may further provide optical spreading and/or converging of light. Arrangement of concave and convex optical circuit terminals may also be used to create an asymmetrical construction that physically will not allow the plug connector 106 to be inserted into the receptacle connector 104 with an incorrect orientation. In addition, other structural arrangements and elements may create asymmetry, such as a non-uniform spacing of the optical circuit terminals or the inclusion of one or more slots, protrusions, bumps, ledges and the like, which will not allow the plug connector 106 to be inserted into the receptacle connector 104 with an incorrect orientation. Such structures may, in addition to preventing the plug connector 106 to be inserted into the receptacle connector 104 with an incorrect orientation, serve as releasable retaining structures that can hold the plug connector 106 to the receptacle connector 104, as discussed above.

The first device transmit optical terminal 132 and the second device transmit optical terminal 136 are coupled in one example to a light source or emitter that generates one or more optical signals, such as a laser 150. The laser 150 may be a vertical cavity surface-emitting laser (VCSEL). The laser 150 generates an optical signal to be transmitted along the first transmit optical pathway 110 and the second transmit optical pathway 114. A driver 152 within the electronic device 102 receives data from a processor 156 that is to be transmitted by the electronic device 102 over the optical circuit pathways. The data is typically in the form of an electrical signal, and may include analog signals, digital signals or a combination thereof. The driver 152 produces a properly conditioned drive signal to drive the laser 150 such that one or more optical signals are generated by the laser 150 that represent the data to be transmitted, that is, sent external to the electronic device 102. The optical signals generated by the laser 150 are typically digital signals and can be encoded in any fashion. In one example, the first device transmit optical terminal 132 and the second device transmit optical terminal 136 are coupled to the laser 150 through a transmitter optical switch 196. The transmitter optical switch 196 switches the generated optical signal to one of the first device transmit optical terminal 132 or the second device transmit optical terminal 136.

The first device receive optical terminal 134 and the second device receive optical terminal 138 are coupled to an optical detector/amplifier 154. The detector/amplifier 154 receives optical signals conveyed by the first receive optical pathway 112 and the second receive optical pathway 116 and extracts, including the decoding of, data communicated through those optical signals. The detector/amplifier 154 may comprise a transimpedance amplifier, for which an input optical signal generates a current signal, which may be amplified and expressed as an output voltage signal. The detector/amplifier 154 delivers the extracted data to the processor 156. The extracted data is typically in the form of an electrical signal. In one example, the first device receive optical terminal 134 and the second device receive optical terminal 138 are coupled to the detector/amplifier 154 through a receiver optical switch 198.

In one example, the transmitter optical switch 196 and the receiver optical switch 198 allow a common transmitting laser 150 and receiving optical detector/amplifier 154 to be used to communicate over two separate bi-directional optical circuits, thereby conserving the expense of duplicating these opto-electrical components. In a variation, independent lasers may generate optical signals for the respective transmit optical pathways 110 and 114, and independent detectors may receive optical signals conveyed by the receive optical pathways 112 and 116. In some examples, one or more of the laser 150, the optical detector/amplifier 154, the transmitter optical switch 196 and the receiver optical switch 198 are contained within a pre-formed assembly containing other components of the receptacle connector 104.

The illustrated mated optical and electrical data connector pair 100 includes magnet attachment areas that are located on both the plug connector 106 and the receptacle connector 104 so as to hold those two connectors together when forming the mated connector pair 100. The plug connector 106 includes a first plug magnet 122 and a second plug magnet 124 that are illustrated in this example as being located on either side of the optical circuit pathways. The first plug magnet 122 and second plug magnet 124 are magnetic attachment areas for the plug connector 106. The receptacle connector 104 has a first receptacle magnet 126 and a second receptacle magnet 128. The first receptacle magnet 126 and second receptacle magnet 128 are magnetic attachment areas for the receptacle connector 104. In contrast to the optical circuit terminals of the receptacle connector 104, the magnets 126 and 128 of the receptacle connector are depicted as deployed proximate to the distal end of the receptacle connector. In other examples, magnetic attachment areas are able to have any suitable shape and configuration.

The first plug magnet 122 and the first receptacle magnet 126 are located at corresponding locations in their respective connectors such that they engage each other when the plug connector 106 is inserted into the receptacle connector 104. The second plug magnet 124 and the second receptacle magnet 128 are located at similar locations on their respective connectors. The second plug magnet 124 and the second receptacle magnet 128 are located on their respective connectors at locations that are across from the optical terminals of those connectors. In order to facilitate magnetically fastening the plug connector 106 to the receptacle connector 104, the first plug magnet 122 and the first receptacle magnet 126 are positioned to face each other in the mated connector pair 100 with opposite magnetic polarity. The second plug magnet 124 and the second receptacle magnet 128 are similarly mounted to face each other with opposite magnetic polarity. In one example, the first receptacle magnet 126 and the second receptacle magnet 128 have opposite polarities facing the plug connector 106 so that the plug magnets will repel the receptacle magnets if the orientation of the plug connector 106 is inadvertently reversed.

The above described arrangement of the plug magnets and the receptacle magnets allow the receptacle connector 104 and the plug connector 106 to have a symmetrical construction that physically allows the plug connector 106 to be inserted into the receptacle connector 104 with an incorrect orientation. In an example, a symmetrical configuration would allow the insertion of the plug connector 106 into the receptacle connector 104 such that the first plug magnet 122 is opposite the second receptacle magnet 128. Although this incorrect, reversed, insertion is physically possible due to the symmetrical configuration of the connectors, the magnetic polarity of the receptacle magnets and their opposing plug magnets will repel those magnets and prohibit inserting the plug connector 106 into the receptacle connector 104 with this incorrect orientation.

The magnets of one example are electrically conductive and are coupled to electrical power conductors to provide electrical power to the electronic device 102 or allow the electronic device 102 to provide power to external electronic accessories or other devices connected to a plug connector 106 mated to the receptacle connector 104. The first plug magnet 122 is coupled to a positive bundle power conductor 118 and the second plug magnet 124 is coupled to a ground bundle power conductor 120. The positive bundle power conductor 118 and the ground bundle power conductor 120 are coupled to a suitable Direct Current (DC) power source to provide power to the electronic device. The first receptacle magnet 126 is coupled to a positive device power conductor 161 and the second receptacle magnet 128 is coupled to a ground device power conductor 163. The positive device power conductor 161 and the ground device power conductor 163 are in turn coupled to a power management module 160 of the electronic device 102. The power management module 160 provides electrical power to the electronic device 102 as well as charges batteries (not shown) or other chargeable or rechargeable power elements of the electronic device 102.

In various examples, the opto-electronic components of the electronic device 102, such as the laser 150, the detector/amplifier 154, or both, are only supplied with power that is delivered through the receptacle connector 104. These components in such examples are not provided with power supplied by a power source, such as a battery, that is internal to the electronic device 102. In such examples, the opto-electronic components of the electronic device 102 are only powered when an optical data communications circuit is connected to the receptacle connector 104, and thereby conserves the energy stored or provided by the internal energy of the electronic device 102.

When the plug connector 106 is inserted into the receptacle connector 104, the first plug magnet 122 is in physical contact with the first receptacle magnet 126 and the second plug magnet 124 is in physical contact with the second receptacle magnet 128. These magnets are electrically conductive and therefore electrically conductive paths are respectively formed through the contacting magnets. In the illustrated example, the first plug magnet 122 and the first receptacle magnet 126 form a conductive path between the positive bundle power conductor 118 and the positive device power conductor 161. Similarly, the second plug magnet 124 and the second receptacle magnet 128 form another conductive path between the ground bundle power conductor 120 and the ground device power conductor 163.. In this way, the respective magnets may perform one or more functions: preventing insertion of a plug connector 106 into a receptacle connector 104 with an incorrect orientation; urging insertion of a plug connector 106 into a receptacle connector 104 with a correct orientation; maintaining insertion of a correctly oriented plug connector 106 in a receptacle connector 104 while also enabling ready release of the plug connector 106 from the receptacle connector 104; and being part of a conductive path.

The mated optical and electrical data connector pair 100 depicts a first plug connector protrusion 192 and a second plug connector protrusion 194 that extend from the plug connector 106 and thereby form extensions of the plug connector 106. The first plug connector protrusion 192 and the second plug connector protrusion 194 insert into corresponding cavities of the receptacle connector 104 to create the mated connector pair 100. In one example, the first plug connector protrusion 192 and the second plug connector protrusion 194 are alignment features of the plug connector 106 that cooperate with cavities within the receptacle connector 104 to align each of the optical terminals of the plug connector 106 with a respective corresponding optical terminal of the corresponding receptacle connector 104. In one example, the first plug connector protrusion 192 and the second plug connector protrusion 194 are movably coupled to the plug connector 106 and are urged into an extended position by one or more yieldable members (not shown) within the plug connector 106. As the plug connector 106 is inserted into the receptacle connector 104, the first plug connector protrusion 192 and the second plug connector protrusion 194 are urged into the plug connector 106 and are pressed into corresponding cavities of the receptacle connector 104.

Once the plug connector 106 is inserted into the receptacle connector 104, plug connector 106 and the receptacle connector 104 are held together by a magnetic attachment between A) the first plug magnet 122 and the first receptacle magnet 126, and B) the second plug magnet's 124 and the second receptacle magnet 128. In some examples, these magnetic attachments are a main retaining force holding the plug connector I06 to the receptacle connector 104. In other examples, other retaining forces are used to hold the plug connector 106 to the receptacle connector 104. For example, one or more yieldable clips, hasps, snaps or other releasable retaining structures (not shown) are able to be incorporated into the receptacle connector 104 to engage voids or other features formed on the surface of the plug connector 106 when the plug connector 106 is inserted into the receptacle connector 104.

As described above, the first plug connector protrusion 192 and the second plug connector protrusion 194 are urged into cavities within the receptacle connector 104 under force of a yieldable member within the plug connector 106 when the plug connector 106 is inserted into the receptacle connector 104. The force of the yieldable member causes the conjugate shapes of the plug optical terminals and the device optical terminals to mate without a gap. Once the plug connector 106 is inserted into the receptacle connector 104, an optical circuit connection is completed between the optical circuit pathways of the cable bundle 108 and the laser 150 and detector/amplifier 154.

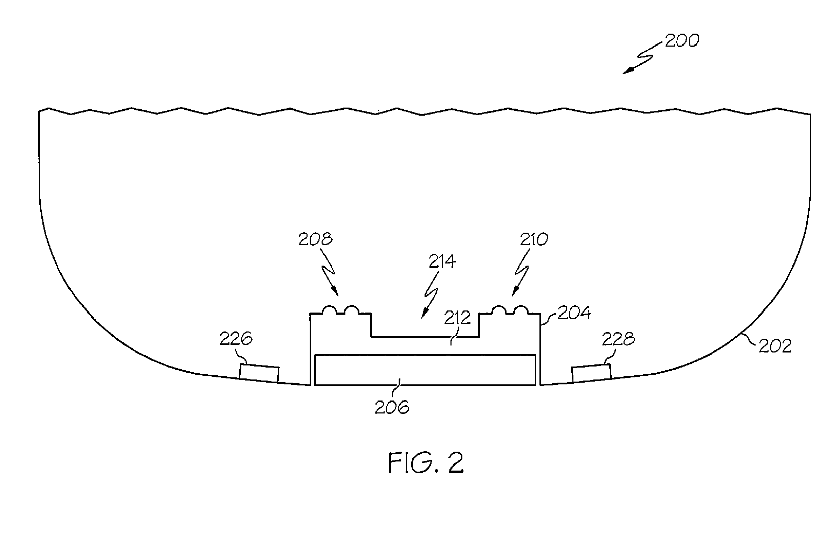

FIG. 2 illustrates a receptacle connector detail 200 in accordance with one example. The receptacle connector detail 200 shows a device 202 as an outline of a housing of a portable electronic device. The receptacle connector detail 200 also shows a receptacle connector 204 that is similar to the receptacle connector 104 discussed above. The receptacle connector 204 is shown to include a first cavity 208 and a second cavity 210. These two cavities respectively receive the first plug connector protrusion 192 and the second plug connector protrusion 194, respectively.

An electrical data communications interface 214 is shown between the first cavity 208 and the second cavity 210. The electrical data communications interface 214 of one example is similar to the above described electrical receptacle connector 180, where the electrical data communications interface 214 conforms to a micro-USB interface. A first receptacle magnet 226 and a second receptacle magnet 228 are disposed in the vicinity of the first cavity 208 and the second cavity 210.

The receptacle connector 204 has a cavity 212 that receives a corresponding plug connector, such as plug connector 106 described above. This cavity 212 in one example includes the first cavity 208 and the second cavity 210 as well as a cavity to receive a plug connector component to mate with the electrical data communications interface 214. The end of the cavity 212 at the edge of the electronic device 202 includes a door 206 that is normally closed to prevent contaminants from entering the cavity 212 of the receptacle connector 204. The door 206 in this example is rotatably or hingedly mounted at the edge of the receptacle connector 204 near the surface of the housing of the electronic device 202. The door 206 is configured to open upon the application of force, such as a force accompanying the insertion of the plug connector 106, and to substantially close in the absence of the force. The door 206 is urged closed by a biasing element such as a spring, so as to block the opening of the cavity 212 of the receptacle connector 104, in the absence of a plug connector. Insertion of the plug connector causes the door 206 to be urged into an open condition or position to allow the receptacle connector 204 to receive the plug connector. The door 206 need not open exactly as shown.

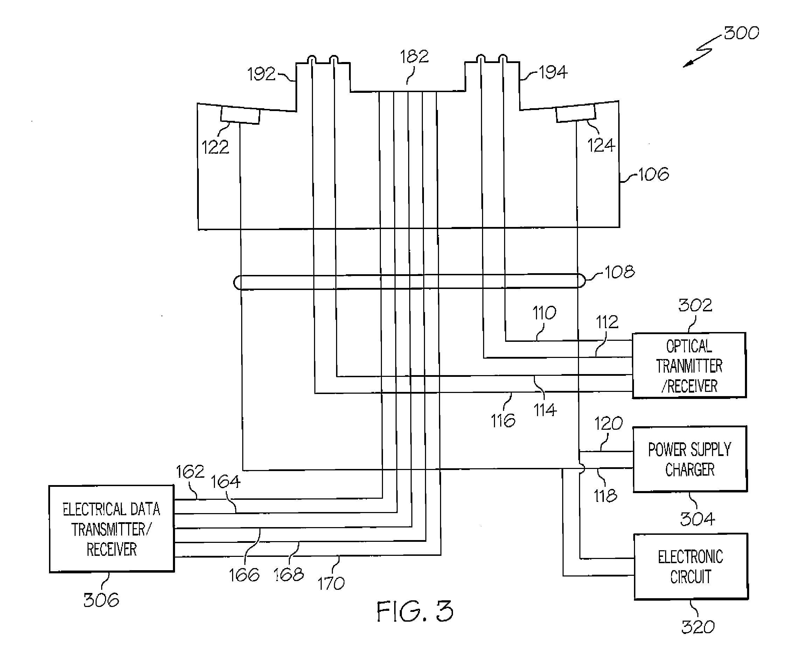

FIG. 3 illustrates a data and power supply circuit connection 300, according to one example. The data and power supply circuit connection 300 depicts a plug connector 106 with a cable bundle 108 as described above with regards to FIG. 1. The cable bundle 108 illustrates the four optical pathways, the first transmit optical pathway 110, a first receive optical pathway 112, a second transmit optical pathway 114 and a second receive optical pathway 116, being routed to an optical transmitter/receiver 304. The optical transmitter/receiver 304 is located in, for example, an external computer with which the electronic device 102 communicates data. It is also possible that the optical transmitter/receiver 304 may be located elsewhere, such as at the opposite end of the cable bundle 108.

The data and power supply circuit connection 300 further depicts the first plug magnet 122 is coupled to a positive bundle power conductor 118 and the second plug magnet 124 is coupled to a ground bundle power conductor 120. The positive bundle power conductor 118 and the ground bundle power conductor 120 are coupled to a power supply/charger 302. In an example, the plug connector 106 is able to connect to a receptacle connector 104 that is part of the electronic device 102 described above. The electrical power is used to either operate the electronic device or charge batteries or other power storage elements within the electronic device. The power supply/charger 302 may include one or more electric or electronic elements that may facilitate power provision or charging, such as a transformer, power regulator, rectifier, and the like. In addition to providing electrical power to the electronic device 102, the positive bundle power conductor 118 and the ground bundle power conductor 120 are able to deliver power from the electronic device 102 to an electrical circuit 320 that is external to the electronic device 102, such as to an electronic accessory connected to the electronic device through the cable bundle 108.

The cable bundle 108 further contains five electrical conductors, the first electrical conductor 162, the second electrical conductor 164, the third electrical conductor 166, the fourth electrical conductor 168, and the fifth electrical conductor 170. These five electrical conductors are routed to an electrical data transmitter/receiver 306. The electrical data transmitter/receiver 306 is located in, for example, an external computer with which the electronic device to which the plug connector 106 is mated in order to communicate data therewith. The electrical conductors are able to be either directly coupled to electrical data transmitter/receiver 306 or coupled to the electrical data transmitter/receiver 306 through any suitable connector.

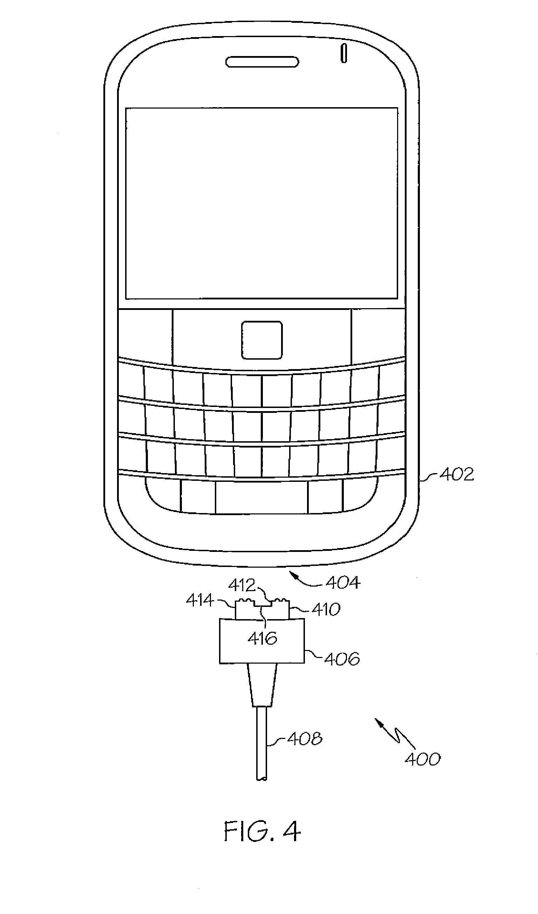

FIG. 4 illustrates an electronic device and cable with connector 400, in accordance with one example. An electronic device 402 in this example is a portable electronic device that includes a data processor and internal power management components. The electronic device 402 may include a display screen that may be able to produce graphical output, such as high resolution video. A plug connector 406 is shown at one end of a cable bundle 408. The plug connector 406 is further shown with a plug protrusion 410 that includes a first connector protrusion 414 and a second connector protrusion 412.

As described above with regards to FIG. 1, the first connector protrusion 414 in one example includes the first plug optical terminal 130 and the second plug optical terminal 131. The second connector protrusion 412 includes the third plug optical terminal 133 and the fourth plug optical terminal 135. An electrical plug connector 416, which is similar to the electrical plug connector 182 described above, is also located on the plug protrusion 410.

The plug protrusion 410 is inserted into a receptacle connector 404 at the bottom of the electronic device 402. The plug connector 406 and the receptacle connector 404 are similar to the plug connector 106 and the receptacle connector 104 described above in detail. The electronic device 402 further includes similar optical and electrical data communications components as were also described in detail above with regards to FIG. 1.

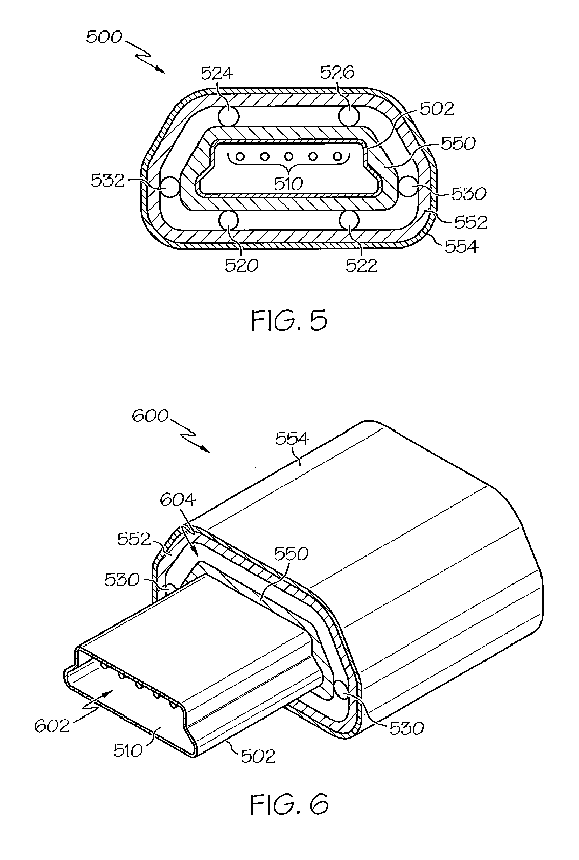

FIG. 5 illustrates an electrical and optical data communications circuit connector 500, according to one example. The electrical and optical data communications circuit connector 500 is an alternative connector to the plug connector 106 described above with regards to FIG. 1. The electrical and optical data communications circuit connector 500 includes optical circuit pathways and an electrical data communications interface 510. The electrical data communications interface 510 includes electrical contacts for electrical circuit that communicate data by electrical signals. In addition to electrical circuits that communicate data, the electrical data communications interface 510 is able to, but not required to, include electrical contacts to convey electrical power to an electronic device. In an example, the electrical data communications interface 510 conforms electrically and physically to a micro-Universal Serial Bus (USB) interface. The electrical data communications interface 510 includes the grounded connector shield 502 defined by the micro-USB interface.

The electrical and optical data communications circuit connector 500 depicts a first end of a connector body. The electrical and optical data communications circuit connector 500 has a connector body that adds a surrounding outer portion around the electrical data communications interface 510 to provide additional communications and electrical power circuits as well as mechanical features such as attachment magnets. The electrical data communications interface 510 is an inner portion of the connector body forming the electrical and optical data communications circuit connector 500.

The electrical and optical data communications circuit connector 500 includes an inner conductive ring 550 and an outer conductive ring 552. The inner conductive ring 550 conducts a positive Direct Current (DC) voltage. The outer conductive ring 552 forms a ground circuit for the DC voltage allowing current carried at the positive DC voltage by the inner conductive ring 550 to return to its source. A shroud 554 encases the outside of the outer conducive ring and serves as an electrical insulator. The combination of the inner conducive ring 550 and the out conductive ring 552 form an electrical power circuit by which electrical power is conducted through a cable coupled to the electrical and optical data communications circuit connector 500. Such electrical power is able to be used to, for example, power an electronic device or charge a battery within the electronic device.

The electrical and optical data communications circuit connector 500 includes magnetic attachment areas and optical terminals that are disposed in an outer portion of the connector that is between the inner conductive ring 550 and the outer conductive ring 552. A first magnet 530 and a second magnet 532 are located on opposite sides from one another of the electrical data communications interface 510. In one example, the first magnet 530 and the second magnet 532 have opposite magnetic polarities to further ensure proper orientation of the electrical and optical data communications circuit connector 500 when engaging a corresponding connector to which it is mated.

The outer portion further includes a number of optical terminals disposed therein. A first optical input terminal 520 and a first optical output terminal 524 are located at the left of the outer portion. The first optical input terminal 520 and the first optical output terminal 524 form a first bi-directional optical communications circuit. The first optical input terminal 520 and the first optical output terminal 524 each connect to a respective corresponding optical terminal on a corresponding connector when the electrical and optical data communications circuit connector 500 engages the corresponding connector when it is mated thereto.

The outer portion also includes a second optical input terminal 522 and a second optical output terminal 526, which are located at the right of the outer portion. The second optical input terminal 522 and the second optical output terminal 526 form a second bi-directional optical communications circuit. The second optical input terminal 522 and the second optical output terminal 526 each connect to a respective corresponding optical terminal on a corresponding connector when the electrical and optical data communications circuit connector 500 engages the corresponding connector when it is mated thereto.

FIG. 6 is an isometric view 600 of the electrical and optical data communications circuit connector 500 of FIG. 5. As shown, the inner portion 602 of the connector body, that contains the electrical data communications interface 510, protrudes beyond the outer portion 604 of the connector body. The components of the outer portion 604 of the connector body, including the inner conductive ring 550, the outer conductive ring 552, the first magnet 530, and the second magnet 532, all end in substantially a common plane. Optical terminals located in the outer portion 604 are able to end at that common plane as well or protrude to facilitate insertion and alignment into a corresponding connector. The outer conductive ring 552 is surrounded by a shroud 554, as described above. Although electrical data communications interface 510 may be asymmetrical such that the electrical and optical data communications circuit connector 500 cannot generally be mated to a corresponding connector with an incorrect orientation, electrical and optical data communications circuit connector 500 may include one or more slots, protrusions, bumps, ledges and the like. Such structures may, in addition, serve as releasable retaining structures that can securely and releasably hold the electrical and optical data communications circuit connector 500 to the corresponding connector. Such structures may further serve to help maintain components, such as optical terminals, in a useful position with respect to corresponding components on the corresponding connector.

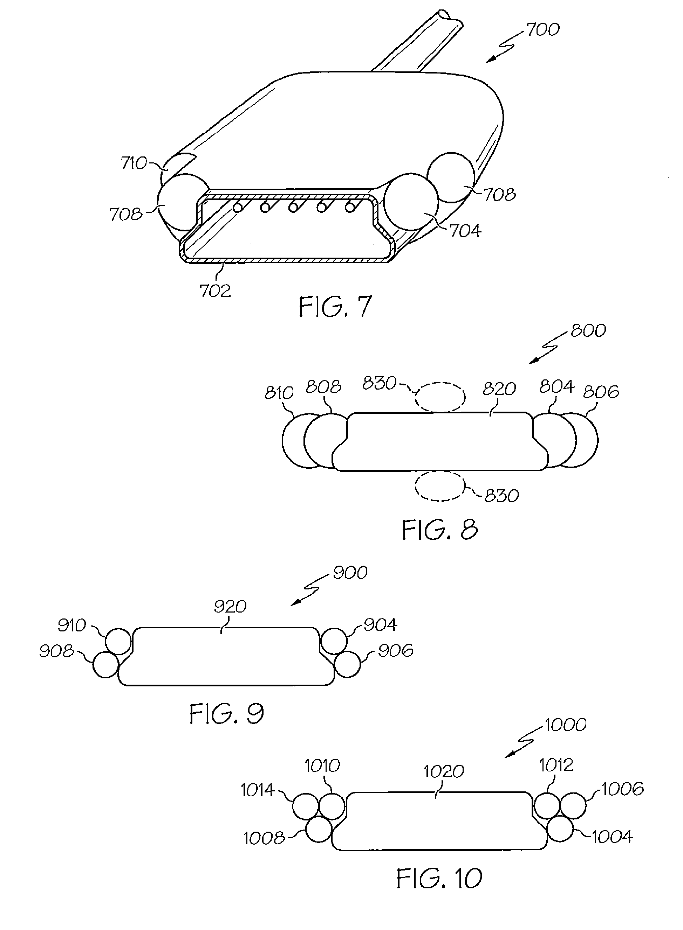

FIG. 7 illustrates a first alternative electrical and optical connector 700. The first alternative electrical and optical connector 700 includes a connector body 720 that includes an electrical data communications interface 702 along with four optical terminals. A first optical input terminal 704 and a first optical output terminal 706 are located on a first side of the connector body 720 in a substantially horizontal arrangement. A second optical input terminal 708 and a second optical output terminal 710 are located on a second side of the connector body in a substantially horizontal arrangement, where the second side is opposite the first side. The first optical input terminal 704 and a first optical output terminal 706 form a first bi-directional optical circuit and the second optical input terminal 708 and the second optical output terminal 710 form a second bi-directional optical circuit that is independent of the first bi-directional communications circuit.

FIG. 8 illustrates a modified first alternative electrical and optical connector 800. The modified first alternative electrical and optical connector 800 has an electrical data communications interface 820 with a first optical input terminal 804 and a first optical output terminal 806 that are located on a first side of the electrical data communications interface 820. A second optical input terminal 808 and a second optical output terminal 810 are located on a second side of the electrical data communications interface where the second side is opposite the first side. Additionally, the modified first alternative electrical and optical connector 800 may include magnets 830 to implement magnetic attachment, such as by attraction to a magnet of opposite polarity or to an unmagnetized magnetic surface, of the electrical data communications interface 820 to a corresponding connector with which it is mated. The magnets 830 may perform one or more functions such as those described previously.

FIG. 9 illustrates a second alternative electrical and optical connector 900. The second alternative electrical and optical connector 900 has an electrical data communications interface 920 with a first optical input terminal 904 and a first optical output terminal 906 that are located on a first side of the electrical data communications interface 920 in a substantially vertical arrangement. A second optical input terminal 908 and a second optical output terminal 910 are located on a second side of the electrical data communications interface in a substantially vertical arrangement, where the second side is opposite the first side.

FIG. 10 illustrates a third alternative electrical and optical connector 1000. The third alternative electrical and optical connector 1000 has an electrical data communications interface 1020 with a first optical input terminal 1004 and a first optical output terminal 1006 that are located on a first side of the electrical data communications interface 1020. A second optical input terminal 1008 and a second optical output terminal 1010 are located on a second side of the electrical data communications interface, where the second side is opposite the first side. The third alternative electrical and optical connector 1000 also has a third optical input terminal 1012 located on the first side of the electrical data communications interface and a third optical output terminal 1014 located on the second side of the electrical data communications interface 1020. The third optical input terminal 1012 and the third optical output terminal 1014 form a third bi-directional optical circuit that is independent from the first bi-directional optical circuit and the second bi-directional optical circuit.

The alternative electrical and optical connectors shown in FIGs. 7-10 have an electrical data communications interface that protrudes from the optical circuit terminals of those connectors. In further examples, it is to be noted that alternative electrical and optical connectors are able to have an electrical data communications interface that is recessed from the optical circuit terminals of their connectors, or several optical circuit terminals are able to have some optical circuit terminals that protrude beyond the electrical data communications interface and the rest of the optical circuit terminals are able to be recessed from the electrical data communications interface. The electrical data communications interface of some examples are also able to be distributed such that part of the electrical data communications interface has electrical terminals that protrude beyond the optical circuit terminals and the remainder of the electrical terminals of the electrical data communications interface are recessed from the optical circuit terminals. The configurations set forth in FIGs. 7-10 are not exclusive, but are intended to indicate some typical variations for an electrical and optical connector that may have a comparatively narrow profile.

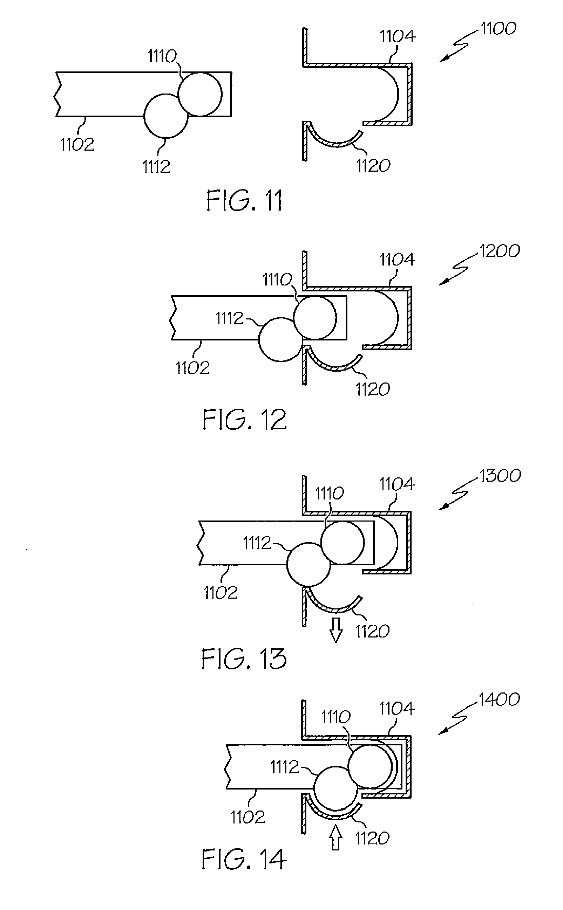

FIGs. 11 through 14 illustrate an optical terminal engaging connector pair in accordance with one example. A first connector body 1102 with a first optical terminal 1110 and a second optical terminal 1112. The second optical terminal 1112 is mounted on the bottom side of the first connector body 1102. The first connector body 1102 engages a second connector body 1104 that includes an optical terminal engagement clip 1120. The optical terminal engagement clip 1120 has a conjugate shape to the second optical terminal 1112, and is yieldably mounted on the bottom side of the second connector body 1104.

FIG. 11 shows a separated optical terminal engaging connector pair 1100, where the first connector body 1102 is removed from the second connector body 1104. FIG. 12 shows a first partially engaged optical terminal engaging connector pair 1200, where the first connector body is partially inserted into the second connector body 1104 and the second optical terminal 1112 touches the optical terminal engagement clip 1120.

FIG. 13 shows a second partially engaged optical terminal engaging connector pair 1300, where the first connector body 1102 is continued to be inserted into the second connector body 1104. In this position, the second optical terminal 1112 urges the optical terminal engagement clip 1120 down.

FIG. 14 shows a completely engaged optical terminal engaging connector pair 1400, where the first connector body 1102 is completely inserted into the second connector body 1104. In this position, the optical terminal engagement clip 1120 returns to it original position and engages the second optical terminal 1112 to secure the first connector body 1102 in the completely engaged position within the second connector body 1104.

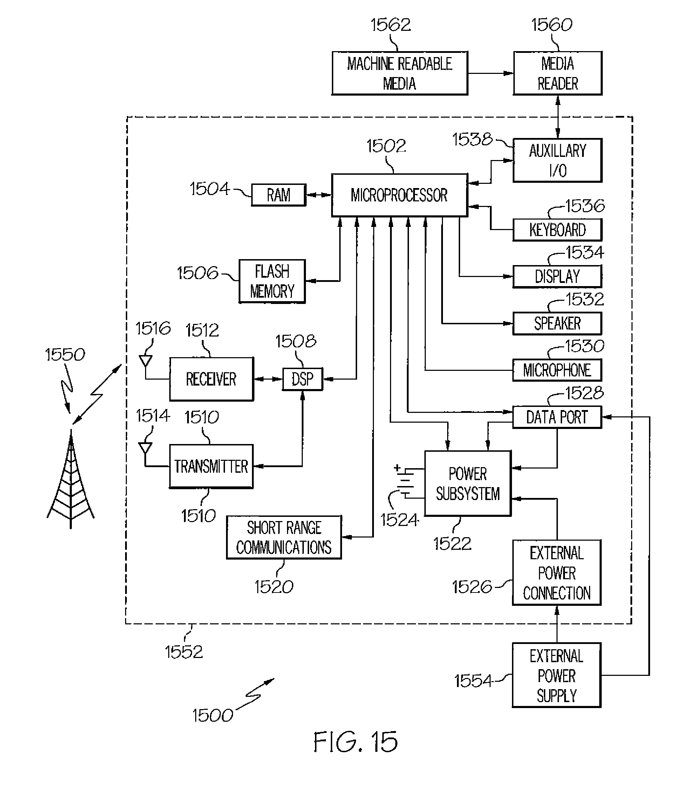

FIG. 15 is a block diagram of an electronic device and associated components 1500 in which the systems and methods disclosed herein may be implemented. In this example, an electronic device 1552 is a wireless two-way communication device that is able to provide one or both of voice and data communications capabilities. Such electronic devices communicate with a wireless voice or data network 1550 via any suitable wireless communications protocol or protocols. Wireless voice communications are performed using either an analog or digital wireless communications protocols according to the network 1550 to which it is coupled. Data communications to and from the electronic device 1552 support exchanging data with other computer systems through any suitable network, such as the Internet. Examples of electronic devices that are able to incorporate the above described systems and methods include data pagers, data messaging devices, cellular telephones, or a data communication device that may or may not include telephony capabilities.

The illustrated electronic device 1552 is an example electronic wireless communications device that includes two-way wireless communications component to provide wireless data communications with a wireless data network, a wireless voice network, or both. Such electronic devices incorporate communication subsystem elements such as a wireless transmitter 1510, a wireless receiver 1512, and associated components such as one or more antenna elements 1514 and 1516. A digital signal processor (DSP) 1508 performs processing to extract data from received wireless signals and to generate signals to be transmitted. The particular design of the communication subsystem is dependent upon the communication network and associated wireless communications protocols with which the device is intended to operate.

Data communications with the electronic device 1552 generally includes receiving data, such as a text message or web page download, through the receiver 1512 and providing that received data to the microprocessor 1502. The microprocessor 1502 is then able to further process the received data for output to the display 1534 or to other devices such as through an auxiliary I/O device 1538 or through the data port 1528. The electronic device 1552 also allows a user to create data items, such as e-mail messages, using the keyboard 1536 in conjunction with the display 1534 and possibly with data exchanged through an auxiliary I/O device 1538. Such created data items are then able to be transmitted over a communication network through the transmitter 1510.

The electronic device 1552 performs voice communications by providing received signals from the receiver 1512 to the speaker 1532. A user's voice is converted to electrical signals by microphone 1530 for transmission by transmitter 1510.

The electronic device may contain a short-range communications subsystem 1520 to support communications between the electronic device 1552 and different systems or devices. Examples of short-range communications subsystem 1520 elements include an infrared device and associated circuits and components, or a Radio Frequency based communications subsystem such as a subsystem providing communications over a Bluetooth® communications standard.

The electronic device 1552 includes a microprocessor 1502, which may be, but need not be, the same processor as processor 156 described above, that controls device operations for the electronic device 1552. The microprocessor 1502 controls and exchanges data with the above described communications subsystem elements to perform wireless communications with the network 1550. The microprocessor 1502 performs processing by operating with, for example, flash memory 1506, random access memory (RAM) 1504, auxiliary input/output (I/O) device 1538, data port 1528, display 1534, keyboard 1536, speaker 1532, microphone 1530, a short-range communications subsystem 1520, a power subsystem 1522, and any other device subsystems.

One or more power storage or supply elements, including an internal power pack, such as a battery 1524, is coupled to a power subsystem 1522 to provide power to the circuits of the electronic device 1552. The power subsystem 1522 includes power distribution circuitry to supply electric power to the various components of the electronic device 1552 and also includes battery charging circuitry to support recharging the battery 1524 or circuitry to replenish power to another power storage element. An external power supply 1554 is able to be coupled to the power subsystem 1522. The power subsystem 1522 includes a battery monitoring circuit that provide a status of one or more battery conditions, such as remaining capacity, temperature, voltage, current draw, and the like.

The data port 1528 provides data communication between the electronic device 1552 and one or more external devices. The data port 1528 includes, for example, a connector similar to the receptacle connector 104 described above. The data port 1528 is also able to be used to convey external power to the power subsystem 1522 from a suitable external power supply, as discussed above. Data port 1528 of, for example, an electronic accessory is able to provide power to an electronic circuit, such as microprocessor 1502, and support exchanging data between the microprocessor 1502 and a remote electronic device that is connected through the data port 1528.

Operating system software used by the microprocessor 1502 is stored in flash memory 1506. In addition to, or in place of, flash memory 1506, a battery backed-up RAM or other non-volatile storage data elements are able to store operating systems, other executable programs, or both.

RAM 1504 is used to store data produced or used by microprocessor 1502. RAM 1504 can also temporarily store program data such as is extracted from flash memory 1506 or from other storage locations. Data received via wireless communication signals or through wired communications is also stored in RAM 1504.

The microprocessor 1502 in some examples executes operating system software as well as various other software applications such as user applications, small, special purpose applications referred to as "apps," and the like. Some software, such as operating system and other basic user functions such as address books, are able to be provided as part of the manufacturing process for the electronic device, such as by storage into flash memory 1506.

In addition to loading applications as part of a manufacturing process, further applications are able to be loaded onto the electronic device 1552 through, for example, the wireless network 1550, an auxiliary I/O device 1538, data port 1528, short-range communications subsystem 1520, or any combination of these interfaces. Once these applications are loaded into the electronic device 1552, these applications are executed by the microprocessor 1502.

A media reader 1560 is able to be coupled to an auxiliary I/O device 1538 to allow, for example, loading computer readable program code of a computer program product into the electronic device 1552 for storage into flash memory 1506. One example of a media reader 1560 is an optical drive such as a CD/DVD drive that reads data from a computer readable medium or storage product such as computer readable storage media 1562. Examples of suitable computer readable storage media include optical storage media such as a CD or DVD, magnetic media, or any other suitable data storage device. The media reader 1560 is alternatively able to be coupled to the electronic device through the data port 1528 or computer readable program code is alternatively able to be provided to the electronic device 1552 through the wireless network 1550.

Non-Limiting Examples

Although specific embodiments of the subject matter have been disclosed, those having ordinary skill in the art will understand that changes can be made to the specific embodiments without departing from the spirit and scope of the disclosed subject matter. The scope of the disclosure is not to be restricted, therefore, to the specific embodiments, and it is intended that the appended claims cover any and all such applications, modifications, and embodiments within the scope of the present disclosure.

## Claims

1. An electronic accessory (300) connectable to a remote electronic device through a data interface, comprising:
an electronic circuit (320) configured to exchange data through a data interface; and
an optical and electrical circuit connector (106), comprising:
a connector body (106) configured to engage a corresponding connector (104);
at least one optical terminal (130, 131, 133, 135) for the data interface coupled to the connector body; and
at least one electrical data interface terminal (182) for the data interface coupled to the connector body.

2. The electronic accessory of claim 1, further comprising a micro-Universal Serial Bus connector (510), the micro-Universal Serial Bus connector comprising the at least one electrical data interface terminal.

3. The electronic accessory of claim 1, the at least one optical terminal comprising a spheroid surface, the spheroid surface configured to contact a corresponding optical terminal of the corresponding connector.

4. The electronic accessory of claim 1, further comprising:
at least one magnetic attachment area (122, 124, 126, 128), coupled to the connector body,
the at least one magnetic attachment area configured to magnetically attach the connector body to the corresponding connector when the connector body is engaged into the corresponding connector.

5. The electronic accessory of claim 4, the connector body having a first end (500), the first end engaging the corresponding connector,
the connector body having a symmetrical configuration on the first end,
the at least one magnetic attachment area comprising at least one pair of magnetic attachment areas (530, 532), each pair of magnetic attachment areas within the at least one pair of magnetic attachment areas having a respective first magnetic area (530) and a respective second magnetic area (532), the respective first magnetic area having a first magnetic polarity that is opposite a second magnetic polarity of the respective second magnetic area.

6. The electronic accessory of claim 4, where the at least one magnetic attachment area comprises an electrically conductive path,
the electrically conductive path having an electrical connection (118, 120) on the at least one magnetic attachment area, and
the electrically conductive path of the at least one magnetic attachment area configured to conduct electrical power between the electrical connection and an electrical contact of the corresponding connector.

7. The electronic accessory of claim 4, the at least one magnetic attachment area and the connector body configured to urge each of the at least one optical terminal into a conjugate surface (138, 134) of a respective corresponding optical terminal (208) of the corresponding connector (204).

8. The electronic accessory of claim 1,
the connector body having a first end (500), the first end engaging the corresponding connector (204),
the first end of the connector body comprising an inner portion and an outer portion (550, 520, 522, 524, 526, 530, 532, 552, 554),
the at least one electrical data interface terminal (510) being disposed within the inner portion, and
the at least one optical terminal (520, 522, 524, 526) being disposed within the outer portion.

9. The electronic accessory of claim 8, at least part of the inner portion (502, 602) protruding at the first end beyond the outer portion.

10. The electronic accessory of claim 8, at least part of the outer portion (208, 2,10) protruding at the first end beyond the inner portion (214).

11. The electronic accessory of claim 8, the outer portion further comprising at least one magnetic attachment area (530, 532) configured to magnetically attach the connector body to the corresponding connector when the connector body is engaged into the corresponding connector.

12. The electronic accessory of claim 8, the outer portion further comprising the at least one conducting power ring (550, 552), each of the at least one conducting power ring encircling the inner portion and configured to conduct electrical power through the connector.

13. The electronic accessory of claim 12, the at least one conducting power ring comprising an inner conductive ring (550) and an outer conductive ring (552),
the outer conductive ring being removed from the inner conductive ring, and
the at least one optical terminal being disposed between the inner conductive ring and the outer conductive ring.
